# EUROPÄISCHE PATENTSCHRIFT

(11) **EP 3 282 161 B1**
(45) Veröffentlichungstag und Bekanntmachung des Hinweises auf die Patenterteilung: **03.07.2019**
(21) Anmeldenummer: 17184676.9
(22) Anmeldetag: 03.08.2017
(51) Int. Cl.: F16K 31/60, F16K 21/06

(54) **BETÄTIGUNGSVORRICHTUNG FÜR EIN VENTIL**
ACTUATION DEVICE FOR A VALVE
DISPOSITIF D'ACTIONNEMENT POUR UNE SOUPAPE

(30) Priorität: 09.08.2016 DE 102016214781
(43) Veröffentlichungstag der Anmeldung: 14.02.2018
(73) Patentinhaber: Hansgrohe SE, 77761 Schiltach (DE)
(72) Erfinder: King, Jürgen, 78730 Lauterbach (DE)
(74) Vertreter: Patentanwälte Ruff, Wilhelm, Beier, Dauster & Partner mbB

(56) Entgegenhaltungen:
- EP-A2- 0 718 534
- WO-A1-2009/131529
- DE-A1- 3 632 220
- DE-A1-102009 048 487
- US-A1- 2015 299 991

## Beschreibung

Die Erfindung bezieht sich auf eine Betätigungsvorrichtung für ein Ventil, wobei die Betätigungsvorrichtung ein Lagergehäuse, einen Bedienhebel, der zwischen einer das Ventil schließenden Schließstellung und einer das Ventil voll öffnenden Volloffenstellung schwenkbeweglich im Lagergehäuse gelagert ist, und eine Teilöffnungs-Raststufe aufweist, die für die Schwenkbewegung des Bedienhebels in Richtung Schließstellung einen Raststufenwiderstand in einer zugehörigen Raststufenstellung bereitstellt. Derartige Betätigungsvorrichtungen werden beispielsweise in wassermengenregulierenden Sanitärventilen verwendet, bei denen die Teilöffnungs-Raststufe dazu dient, eine Wassersparstellung zu definieren.

Aus der Patentschrift DE 10 2009 048 487 B4 ist ein Sanitärventil bekannt, das in einer der dortigen Ausführungen eine solche Betätigungsvorrichtung beinhaltet. Bei diesem Sanitärventil beinhaltet die Teilöffnungs-Raststufe ein zusammenwirkendes Rastelement-Gegenrastelement-Paar, wobei das Rastelement an einem Betätigungsschaft des Bedienhebels und das Gegenrastelement an der Lagerhülse vorgesehen sind. In der gattungsgemäßen Ausführung stellt dort die Teilöffnungs-Raststufe in der zugehörigen Raststufenstellung einen Raststufenwiderstand für die Schwenkbewegung des Bedienhebels sowohl in Richtung Schließstellung als auch in Richtung Volloffenstellung bereit.

Die Offenlegungsschrift WO 2009/131529 A1 beschreibt ein Sanitärventil, das eine Betätigungsvorrichtung beinhaltet, welche eine in Richtung einer Bedienhebelbetätigungsrichtung wirkende Schraubenfeder aufweist. Die Schraubenfeder wird bei einer Verlagerung eines Bedienhebels durch eine Bedienperson von einer wassersparenden Zwischenstellung in eine Volloffenstellung des Sanitärventils vorgespannt, wobei sich ein Verstellbetätigungswiderstand des Betätigungshebels erhöht. Bei einer Entlastung des Betätigungshebels durch die Bedienperson wird der Betätigungshebel von der Schraubenfeder in die Zwischenstellung zurückgestellt.

Die Patentschrift DE 36 32 220 C2 beschreibt eine Steuerkartusche für eine sanitäre Einhebel-Mischarmatur, bei welcher eine mit einem Bedienhebel wirkgekoppelte federnd-elastische Zunge und eine mit der Zunge zusammenwirkende Anlagefläche bei einem Öffnen des Ventils einen Betätigungswiderstand erzeugen, um eine Begrenzung einer maximalen Ausflussmenge zu bewirken und eine Rückstellkraft in Richtung einer Schließrichtung bereitzustellen.

Aus der Patentschrift EP 0 718 534 B1 ist ein Einhebelmischventil mit einer federbelasteten Schraube bekannt, die durch Benutzerbetätigung eines Bedienhebels federnd gegen eine Stoppfläche gedrückt werden kann, um kurzzeitig einen höheren Durchfluss bereitzustellen. Bei Entfall der Benutzerbetätigung stellt die vorgespannte Feder den Bedienhebel zurück.

Die Offenlegungsschrift US 2015/0299991 A1 offenbart eine Einhebel-Betätigungsvorrichtung für ein Sanitärventil mit einem Lagergehäuse und einem Bedienhebel, der in einer Auf-/Zu-Richtung schwenkbeweglich im Lagergehäuse gelagert ist. Die Betätigungsvorrichtung ist so ausgeführt, dass das Ventil auch durch vollständiges Verschwenken des Bedienhebels in Auf-Richtung nicht voll geöffnet wird, sondern jeweils nur rastend um eine von mehreren Öffnungsstufen, was einen Wasserspareffekt bereitstellen soll. Dafür sorgt ein Rastmechanismus, der durch Verschwenken des Bedienhebels von einer Neutralstellung in Zu-Richtung ausrastet, wodurch ein Schließelement gegen einen Ventilzapfen andrückt, der sich beim Verschwenken des Bedienhebels aus der Neutralstellung in Auf-Richtung um jeweils eine Raststufe in Richtung voller Öffnungsstellung weiterbewegt. Mittels eines Vorspannelements wird der Bedienhebel nach Verschwenken in Auf-Richtung oder Zu-Richtung jeweils wieder in die Neutralstellung zurückgedrückt und dort gehalten.

Der Erfindung liegt das technische Problem zugrunde, eine Ventilbetätigungsvorrichtung der eingangs genannten Art zu schaffen, die ein vorteilhaftes Betätigungsverhalten insbesondere im Hinblick auf das Einstellen der Raststufenstellung aufweist.

Die Erfindung löst dieses Problem durch die Bereitstellung einer Betätigungsvorrichtung mit den Merkmalen des Anspruchs 1. Vorteilhafte sowie bevorzugte Ausgestaltungen der Erfindung sind Gegenstand der weiteren Ansprüche. Der Wortlaut der Ansprüche wird durch ausdrückliche Bezugnahme hiermit zum Inhalt der Beschreibung gemacht.

Die erfindungsgemäße Betätigungsvorrichtung weist ein Vorspannelement auf, das den Bedienhebel in seinem Schwenkbereich zwischen der Volloffenstellung und der teilgeöffneten Raststufenstellung in Richtung Raststufenstellung vorspannt. Somit wird zwischen der Raststufenstellung und der Volloffenstellung vom Vorspannelement ein erhöhter Verstellbetätigungswiderstand des Bedienhebels bereitgestellt. Einer Bedienperson kann dadurch bei entsprechender Ventilauslegung signalisiert werden, dass der Bedienhebel sich in einem Bereich mit hohem Wasserverbrauch befindet. Als weiterer Vorteil sorgt das Vorspannelement, wenn der Bedienhebel in diesem Bereich losgelassen wird, für eine selbsttätige Rückkehr in die Raststufenstellung. Des Weiteren ist in diesem Zusammenhang vorteilhaft, dass die Teilöffnungs-Raststufe in der Raststufenstellung einen Raststufenwiderstand für die Schwenkbewegung des Bedienhebels in Richtung Schließstellung bereitstellt. Dieser Raststufenwiderstand und die darauf geeignet abgestimmte Stärke der Vorspannung durch das Vorspannelement können gewährleisten, dass die vom Vorspannelement bewirkte selbsttätige Rückkehrbewegung des Bedienhebels die Raststufenstellung sicher erreicht und dort sicher zum Stillstand kommt, d.h. der Bedienhebel selbsttätig in die Raststufenstellung zurückgeführt wird und dort stehen bleibt.

In Ausgestaltung der Erfindung beinhaltet das Vorspannelement ein sich am Lagergehäuse abstützendes elastisches Element. Vorteilhafterweise kann somit das elastische Element unter Abstützung am Lagergehäuse die gewünschte Vorspannkraft auf den Bedienhebel ausüben. Zudem kann über eine entsprechende Auswahl des elastischen Elementes die Vorspannkraft vorgegeben werden. Diese kann in Richtung Volloffenstellung z.B. wenigstens abschnittweise gleichbleibend, ansteigend oder abfallend gewählt werden. Das elastische Element kann beispielsweise ein federelastisches oder ein gummielastisches Element aufweisen.

In Ausgestaltung der Erfindung weist das elastische Element ein Befestigungsmittel zu seiner Anbringung am Bedienhebel auf. Dies ermöglicht ein Befestigen des elastischen Elements am Bedienhebel. Das Befestigungsmittel kann ein einstückiger Bestandteil des elastischen Elements oder ein separates Bauteil sein. Beispielsweise kann das Befestigungsmittel ein Steckverbindungsmittel sein oder eine Klammer, eine Lasche oder eine Durchgangsbohrung beinhalten.

In Ausgestaltung der Erfindung ist das elastische Element ein an dem Bedienhebel durch ein entsprechendes Steckverbindungsmittel ansteckbares Federbandelement. Vorteilhafterweise ergibt sich daraus, dass der Montageaufwand besonders gering ist. Das Federbandelement kann einfach an den Bedienhebel angesteckt werden. Dies ermöglicht bei Bedarf auch eine relativ einfache Nachrüstung von gattungsgemäßen Ventilbetätigungsvorrichtungen mit diesem Vorspannelement. Zudem unterliegt das Federbandelement nur geringen Alterungserscheinungen und ist dauerhaft federelastisch.

In Ausgestaltung der Erfindung beinhaltet das Lagergehäuse eine Lagerhülse, und das elastische Element stützt sich an einer Hülsenmantelinnenseite der Lagerhülse ab. Diese Ausführungsform ist in Konstruktion und Aufbau vorteilhaft und benötigt nur eine geringe Anzahl an Bauteilen. Sie lässt sich kompakt bauen und der Montageaufwand bleibt gering.

In Ausgestaltung der Erfindung beinhaltet die Teilöffnungs-Raststufe ein Rastelement am Bedienhebel und ein damit zusammenwirkendes Gegenrastelement am Lagergehäuse, wobei das Rastelement und das Gegenrastelement mit der Schwenkbewegung des Bedienhebels relativbeweglich zueinander angeordnet sind und in der Raststufenstellung des Bedienhebels über eine den Raststufenwiderstand erzeugende Anlaufschräge zusammenwirken. Dies stellt eine konstruktiv und funktionell vorteilhafte Realisierung der Teilöffnungs-Raststufe dar. Die Anlaufschräge kann hierbei als von der Wirkung des Vorspannelements nicht überwindbarer Anschlag für die selbsttätige Rücckehrbewegung des Bedienhebels in die Raststufenstellung fungieren.

Vorteilhafte Ausführungsformen der Erfindung sind in den Zeichnungen dargestellt und werden nachfolgend beschrieben. Dabei zeigen:
- Fig. 1: eine Längsschnittansicht eines Sanitärventils mit zugehöriger Betätigungsvorrichtung für eine Einhebel-Mischarmatur in einer Ventilschließstellung,
- Fig. 2: eine Querschnittansicht entlang einer Linie II-II von Fig. 1 in einer geschlossenen Ventilstellung,
- Fig. 3: die Längsschnittansicht von Fig. 1 in einer teilgeöffneten Raststufenstellung,
- Fig. 4: die Querschnittansicht von Fig. 2 in der teilgeöffneten Raststufenstellung,
- Fig. 5: die Längsschnittansicht von Fig. 1 in einer voll geöffneten Ventilstellung und
- Fig. 6: die Querschnittansicht von Fig. 2 in der voll geöffneten Ventilstellung.

Das in den Figuren mit seinen hier interessierenden Komponenten gezeigte Sanitärventil kann insbesondere in sanitären Einhebelmischern zur Temperatureinstellung und Durchflussregulierung eines Fluids, insbesondere Wasser, eingesetzt werden. Zur nutzerseitigen Bedienung beinhaltet das Sanitärventil eine Einhebel-Betätigungsvorrichtung 1. Die Ventilbetätigungsvorrichtung 1 weist ein Lagergehäuse 3 und einen Bedienhebel 2 auf, der zwecks Durchflussregulierung zwischen einer das Ventil schließenden Schließstellung und einer das Ventil voll öffnenden Volloffenstellung um eine Schwenkachse S schwenkbeweglich und z.B. zur Temperatureinstellung, d.h. zur Änderung eines Kaltwasser/Warmwasser-Mischungsverhältnisses, um eine Achse A, die einer Längsmittenachse G eines Ventilkartuschengehäuses 10 entspricht, drehbeweglich im Lagergehäuse 3 gehalten ist.

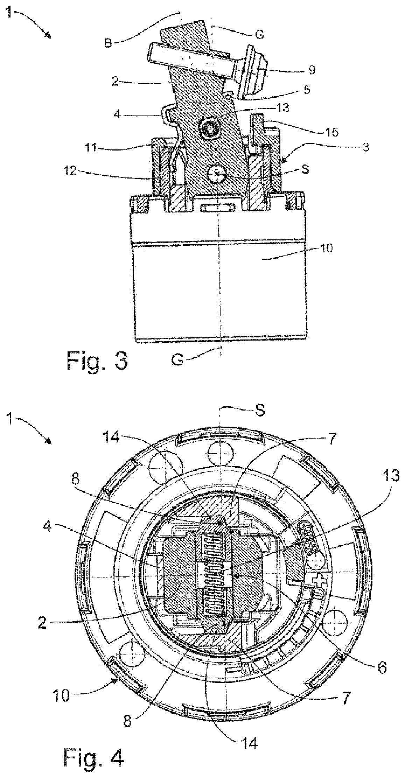

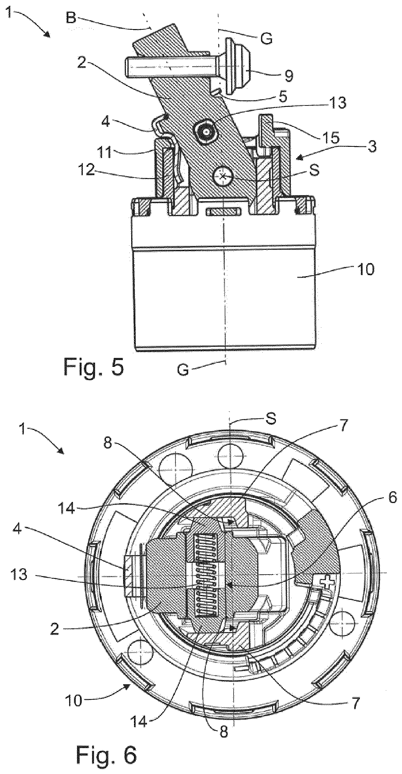

Zwischen der Schließstellung und der Volloffenstellung ist durch eine Teilöffnungs-Raststufe eine teilgeöffnete Raststufenstellung für die Schwenkbewegung des Bedienhebels 2 um die Schwenkachse S definiert. Der Bedienhebel 2 ist in einem oberen Bereich von einer Verbindungsschraube 9 durchdrungen, welche der Verbindung zu einem nutzerbetätigbaren Betätigungsgriff 16 dient. Wie insbesondere aus den Fig. 3 und 5 ersichtlich, beinhaltet das Lagergehäuse 3 eine zylindrische Außenhülse 11 und eine darin befindliche und demgegenüber um die Achse A drehbare, zylindrische Lagerhülse 12. Zwischen der Lagerhülse 12 und dem Bedienhebel 2 ist ein Vorspannelement 4 angeordnet, das den Bedienhebel 2 in seinem Schwenkbereich zwischen der Volloffenstellung und der teilgeöffneten Raststufenstellung in Richtung dieser Raststufenstellung vorspannt.

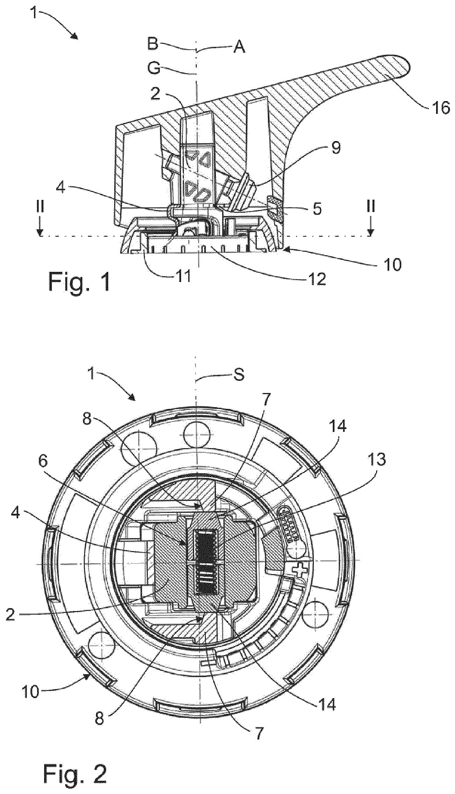

Das Vorspannelement 4 beinhaltet im gezeigten Beispiel ein sich am Lagergehäuse 3 abstützendes elastisches Element in Form eines an den Bedienhebel 2 lösbar ansteckbaren bzw. anclipsbaren Federbandelements, das ein entsprechendes Befestigungsmittel 5 zur steckbaren Anbringung am Bedienhebel 2 aufweist. Im dargestellten Ausführungsbeispiel ist das Befestigungsmittel 5 von einem oberen, annähernd U-förmigen Bereich gebildet, der einstückiger Bestandteil des Federbandelements ist und den Bedienhebel 2 oberhalb eines Absatzes desselben in einem Bereich unterhalb der Verbindungsschraube 9 umgreift, wie insbesondere aus den Fig. 1 und 3 ersichtlich. Ein unterer Abschnitt des in diesem Beispiel annähernd S-förmigen Federbandelements stützt sich an einer Innenseite des Lagergehäuses 3, genauer an einer Hülsenmantelinnenseite der Lagerhülse 12, ab und ein mittlerer Abschnitt des Federbandelements liegt gegen den Bedienhebel 2 an.

Die Teilöffnungs-Raststufe beinhaltet ein Rastelement 6 am Bedienhebel 2 sowie ein Gegenrastelement 7 am Lagergehäuse 3, wie insbesondere aus den Fig. 2, 4 und 6 ersichtlich. Im dargestellten Ausführungsbeispiel weist das Rastelement 6 zwei Federhülsen 14 und ein dazwischen liegendes, komprimierbares Federelement 13 auf, hier in Form einer Schraubenfeder. Dazu ist der Bedienhebel 2 parallel zur Schwenkachse S von einer Aussparung durchsetzt, in welcher das Federelement 13 angeordnet ist, das parallel zur Schwenkachse S wirkt. An den Enden der Schraubenfeder sind die Federhülsen 14 über die Schraubenfeder gestülpt. Das Gegenrastelement 7 umfasst einstückig an der Lagerhülse 12 nach innen abragend angeformte Ansätze auf zwei eine Bewegungsbahn des Bedienhebels 2 flankierenden Innenseiten der Lagerhülse 12. Die Ansätze weisen jeweils auf einer dem Vorspannelement 4 zugewandten Seite eine Anlaufschräge 8 auf und sind L-förmig ausgebildet, wobei sie abschnittsweise rechtwinklig zur Schwenkachse S verlaufen und abschnittsweise in Richtung der Schwenkachse nach innen von der Lagerhülse 12 abragen. Die Federhülsen 14 sind mit korrespondierenden Anlaufschrägen versehen.

In den Fig. 1 und 2 ist die Betätigungsvorrichtung 1 in der Schließstellung des Ventils dargestellt. Eine Längsmittenachse B des Bedienhebels 2 ist in dieser Bedienhebelstellung mit der Längsmittenachse G des Ventilkartuschengehäuses identisch. Das Vorspannelement 4 ist in dieser Stellung wenig oder gar nicht vorgespannt. Die Federhülsen 14 liegen an Stirnseiten der parallel zur Schwenkachse S abragenden Abschnitte des Gegenrastelements 7 an. Das Federelement 13 ist in dieser Stellung komprimiert, der Abstand zwischen den beiden Federhülsen 14 ist relativ gering.

Die Fig. 5 und 6 zeigen die Betätigungsvorrichtung 1 in der Volloffenstellung des Ventils. Die Längsmittenachse B des Bedienhebels 2 ist zur Längsmittenachse G des Ventilkartuschengehäuses 10 um annähernd 45° nach links verschwenkt. Das Vorspannelement 4 ist in dieser Stellung maximal vorgespannt. Die Stirnseiten der Federhülsen 14 liegen in dieser Stellung an den orthogonal zur Schwenkachse S verlaufenden Abschnitten des Gegenrastelements 7 an. Zwischen den Federhülsen 14 ist nun ein relativ großer Abstand. Das Federelement 13 ist dabei wenig oder gar nicht vorgespannt.

Die Fig. 3 und 4 zeigen die Betätigungsvorrichtung 1 in der teilgeöffneten Raststufenstellung. Der Bedienhebel 2 ist dabei mit seiner Längsmittenachse B um ca. 15° zur Längsmittenachse G des Ventilkartuschengehäuses 10 nach links verschwenkt. Das Vorspannelement 4 steht nicht oder unter relativ geringer Vorspannung. Die Federhülsen 14 liegen mit ihren Stirnseiten an den orthogonal zur Schwenkachse S erstreckten Abschnitten der Gegenrastelemente 7 an. Zusätzlich liegen die von kegelförmigen, sich nach außen verjüngenden Mantelflächen gebildeten Anlaufschrägen der Federhülsen 14 an den Anlaufschrägen 8 des Gegenrastelements 7 an.

Um die Betätigungsvorrichtung 1 aus der geschlossenen Ventilposition gemäß der Fig. 1 und 2 in die voll geöffnete Ventilstellung gemäß der Fig. 5 und 6 zu überführen, wird der Bedienhebel 2 von der Bedienperson nach links verlagert. Der Bedienhebel 2 wirkt dabei auf das Vorspannelement 4, das ebenso nach links verlagert wird und dadurch aufgrund seiner Abstützung an der Lagerhülse 12 zunehmend gebogen und vorgespannt wird, so dass es einen zusätzlichen Betätigungswiderstand für die Bedienhebelbetätigung in Richtung Volloffenstellung erzeugt. Die in dem Bedienhebel 2 liegenden Federhülsen 14 werden von ihrer ursprünglichen Lage zwischen den Ansätzen des Gegenrastelements 7 nach links verlagert und gelangen über die Anlaufschrägen 8 der Gegenrastelemente 7 in den orthogonal zur Schwenkachse S liegenden Abschnitt des Gegenrastelements 7, so dass sich das Federelement 13 entspannt.

Wenn die Bedienperson den Bedienhebel 2 in einem Bereich zwischen der teilgeöffneten Raststufenstellung und der Volloffenstellung loslässt, wird er von dem Vorspannelement 4 selbsttätig in die Raststufenstellung gemäß den Fig. 3 und 4 zurückgestellt, indem das Vorspannelement 4 mit seiner Vorspannung auf den Bedienhebel 2 wirkt und diesen nach rechts zurück verschwenkt, bis er die Teilöffnungs-Raststufe erreicht. In der Raststufenstellung verbleibt dann der Bedienhebel 2, da die Vorspannung des Vorspannelements 4 nicht ausreicht, deren Raststufenwiderstand zu überwinden.

Um das Ventil von der teilgeöffneten Raststufenstellung in Richtung der Schließstellung zu betätigen, wird der Bedienhebel 2 von der Bedienperson unter Überwindung des von der Teilöffnungs-Raststufe bereitgestellten Raststufenwiderstands nach rechts verschwenkt bzw. verlagert. Die Federhülsen 14 laufen gegen die Anlaufschrägen der Gegenrastelemente 7 an und werden dadurch zurückgedrückt, so dass das Federelement 13 komprimiert wird. In dieser komprimierten Stellung verbleibt das Federelement 13 längs des Bedienhebel-Schwenkbewegungsweges zwischen der teilgeöffneten Raststufenstellung und der Schließstellung.

In alternativen Ausführungsformen der Erfindung weist die Betätigungsvorrichtung nur eine statt der geschilderten zwei Federhülsen bzw. nur ein Gegenrastelement in Form von nur einem Ansatz auf. In weiteren alternativen Ausführungsformen ist es auch möglich, statt der geschilderten Schraubendruckfeder ein anderes elastisches Element für das Rastmittel zu verwenden, bspw. eine Spiralfeder oder Zugfeder oder ein gummielastisches Element wie eine Gummifeder oder einen Gummibolzen.

In weiteren alternativen Ausführungsformen der Erfindung ist das Vorspannelement eine Spiralfeder oder eine Schraubenfeder, bspw. eine Zug- oder Druckfeder oder ein gummielastisches Element.

In weiteren alternativen Ausführungsformen der Erfindung stellt die Teilöffnungs-Raststufe für die Schwenkbewegung des Bedienhebels nicht nur in Richtung Schließstellung, sondern auch in Richtung Volloffenstellung einen Raststufenwiderstand in der teilgeöffneten Raststufenstellung bereit.

Wie die oben erläuterten Ausführungsbeispiele zeigen, stellt die Erfindung eine vorteilhafte Betätigungsvorrichtung für ein Ventil zur Verfügung, die den Bedienhebel von einer Volloffenstellung bei einer Entlastung durch die Bedienperson selbsttätig in die Raststufenstellung zurückstellt, die insbesondere eine Wassersparstellung sein kann. Somit kann sichergestellt werden, dass die Volloffenposition nur willentlich von der Bedienperson eingestellt werden kann und nur so lange erhalten bleibt, wie die Bedienperson in Richtung der Volloffenposition auf den Bedienhebel einwirkt. Die erfindungsgemäße Betätigungsvorrichtung lässt sich mit geringem Platzbedarf und geringen Montageaufwand realisieren. Mit einem Minimum an Aufwand lässt sich ein wassersparendes Verhalten eines Sanitärventils bewirken. Bei Bedarf können bekannte Betätigungsvorrichtungen mit wenig Aufwand erfindungsgemäß nachgerüstet werden.

## Patentansprüche

1. Betätigungsvorrichtung für ein Ventil, insbesondere für ein Sanitärventil, mit
- einem Lagergehäuse (3),
- einem Bedienhebel (2), der zwischen einer das Ventil schließenden Schließstellung und einer das Ventil voll öffnenden Volloffenstellung schwenkbeweglich im Lagergehäuse gelagert ist, und
- einer Teilöffnungs-Raststufe (6, 7), die für die Schwenkbewegung des Bedienhebels in Richtung Schließstellung einen Raststufenwiderstand in einer zugehörigen teilgeöffneten Raststufenstellung bereitstellt, **gekennzeichnet durch**
- ein Vorspannelement (4), das den Bedienhebel in seinem Schwenkbereich zwischen der Volloffenstellung und der teilgeöffneten Raststufenstellung in Richtung teilgeöffneter Raststufenstellung derart vorspannt, dass es den Bedienhebel bei einer Entlastung durch eine Bedienperson selbsttätig von der Volloffenstellung in die teilgeöffnete Raststufenstellung zurückstellt.

2. Betätigungsvorrichtung nach Anspruch 1, weiter **dadurch gekennzeichnet, dass** das Vorspannelement (4) ein sich am Lagergehäuse (3) abstützendes elastisches Element beinhaltet.

3. Betätigungsvorrichtung nach Anspruch 2, weiter **dadurch gekennzeichnet, dass** das elastische Element ein Befestigungsmittel (5) zur Anbringung des elastischen Elements am Bedienhebel (2) aufweist.

4. Betätigungsvorrichtung nach Anspruch 3, weiter **dadurch gekennzeichnet, dass** das Befestigungsmittel ein Steckverbindungsmittel ist, mit dem das elastische Element an den Bedienhebel ansteckbar ist.

5. Betätigungsvorrichtung nach einem der Ansprüche 2 bis 4, weiter **dadurch gekennzeichnet, dass** das Lagergehäuse eine Lagerhülse (12) beinhaltet und sich das elastische Element an einer Hülsenmantelinnenseite der Lagerhülse abstützt.

6. Betätigungsvorrichtung nach einem der Ansprüche 1 bis 5, weiter **dadurch gekennzeichnet, dass** die Teilöffnungs-Raststufe ein Rastelement (6) am Bedienhebel und ein damit zusammenwirkendes Gegenrastelement (7) am Lagergehäuse beinhaltet, wobei das Rastelement und das Gegenrastelement mit der Schwenkbewegung des Bedienhebels relativbeweglich zueinander angeordnet sind und in der teilgeöffneten Raststufenstellung des Bedienhebels über eine den Raststufenwiderstand erzeugende Anlaufschräge (8) zusammenwirken.

## Claims

1. Actuation device for a valve, preferably for a sanitary valve, comprising
- a bearing housing (3),
- an operating lever (2) pivotably mounted within the bearing housing for movement between a closed position closing the valve and a full-open position completely opening the valve, and
- a partial opening stop notch (6, 7) providing, in an associated partial-open stop notch position, a stop notch resistance for the pivot movement of the operating lever in the direction towards the closed position,
**characterized by**
- a pretensioning element (4) to pretension the operating lever within its pivot range between the full-open position and the partial-open stop notch position in the direction towards the partial-open stop notch position so as to automatically return the operating lever from the full-open position to the partial-open position when released by a user.

2. Actuation device according to claim 1, further **characterized in that** the pretensioning element (4) includes an elastic element which takes support on the bearing housing (3).

3. Actuation device according to claim 2, further **characterized in that** the elastic element includes a fixation means (5) for attaching the elastic element on the operating lever (2).

4. Actuation device according to claim 3, further **characterized in that** the fixation means (5) is a plug connecting means, whereby the elastic element can be plugged on the operating lever.

5. Actuation device according to any one of claims 2 to 4, further **characterized in that** the bearing housing includes a bearing sleeve (12) and the elastic element takes support on a sleeve jacket interior side of the bearing sleeve.

6. Actuation device according to any of claims 1 to 5, further **characterized in that** the partial opening stop notch includes a notch element (6) on the operating lever and a counteracting notch element (7) on the bearing housing cooperating therewith, wherein the notch element and the counteracting notch element are disposed to be movable in relation to each other upon a pivot movement of the operating lever and in the partial-open stop notch position of the operating lever cooperate via a ramp surface (8) generating the stop notch resistance.

## Revendications

1. Dispositif d'actionnement pour une soupape, en particulier pour une soupape sanitaire, comprenant
- un logement de palier (3),
- un levier de commande (2) qui est supporté dans le logement de palier de manière déplaçable par pivotement entre une position de fermeture fermant la soupape et une position complètement ouverte ouvrant complètement la soupape, et
- un cran d'enclenchement d'ouverture partielle (6, 7) qui fournit, pour le mouvement de pivotement du levier de commande dans la direction de la position de fermeture, une résistance de cran d'enclenchement dans une position de cran d'enclenchement associée partiellement ouverte,
**caractérisé par**
- un élément de précontrainte (4) qui précontraint le levier de commande, dans sa plage de pivotement entre la position complètement ouverte et la position de cran d'enclenchement partiellement ouverte, dans la direction de la position de cran d'enclenchement partiellement ouverte de telle sorte qu'il ramène le levier de commande automatiquement de la position complètement ouverte dans la position de cran d'enclenchement partiellement ouverte dans le cas d'une décharge par un opérateur.

2. Dispositif d'actionnement selon la revendication 1, **caractérisé en outre en ce que** l'élément de précontrainte (4) comprend un élément élastique s'appuyant sur le logement de palier (3).

3. Dispositif d'actionnement selon la revendication 2, **caractérisé en outre en ce que** l'élément élastique présente un moyen de fixation (5) pour le montage de l'élément élastique sur le levier de commande (2).

4. Dispositif d'actionnement selon la revendication 3, **caractérisé en outre en ce que** le moyen de fixation est un moyen de connexion par enfichage avec lequel l'élément élastique peut être enfiché sur le levier de commande.

5. Dispositif d'actionnement selon l'une quelconque des revendications 2 à 4, **caractérisé en outre en ce que** le logement de palier comprend une douille de palier (12) et l'élément élastique s'appuie sur un côté intérieur d'enveloppe de douille de la douille de palier.

6. Dispositif d'actionnement selon l'une quelconque des revendications 1 à 5, **caractérisé en outre en ce que** le cran d'enclenchement d'ouverture partielle comprend un élément d'encliquetage (6) sur le levier de commande et un élément d'encliquetage conjugué (7) coopérant avec celui-ci, sur le logement de palier, l'élément d'encliquetage et l'élément d'encliquetage conjugué étant disposés de manière déplaçable l'un par rapport à l'autre avec le mouvement de pivotement du levier de commande et coopérant dans la position de cran d'enclenchement partiellement ouverte du levier de commande par le biais d'un biseau de montée (8) produisant la résistance de cran d'enclenchement.
